# EUROPEAN PATENT SPECIFICATION

(11) **EP 1 184 239 B1**
(45) Date of publication and mention of the grant of the patent: **13.10.2004**
(21) Application number: 01306811.9
(22) Date of filing: 09.08.2001
(51) Int. Cl.: B60S 1/40

(54) **Improvements relating to wiper arm connectors**
Verbesserungen in Bezug auf Befestigungsvorrichtungen für einen Wischerarm
Améliorations concernant les connecteurs pour bras d'essuie-glace

(30) Priority: 31.08.2000 GB 0021248
(43) Date of publication of application: 06.03.2002
(73) Proprietor: Trico Products Corporation, Rochester Hills, MI 48309 (US)
(72) Inventor: Daniels, Roger, Thornhill, Cwmbran, Gwent NP4 5TW (GB)
(74) Representative: Britter, Keith Palmer

(56) References cited:
- DE-A- 19 618 307
- GB-A- 1 572 142

## Description

A conventional type of wiper arm for connection to a windscreen wiper harness has a hooked end which locates within a connector. There is a need to ensure that the arm does not slide out of place accidentally.

GB-A-1572142 discloses a connector for locating a hooked end of a wiper arm and designed for pivotal connection in a windscreen wiper harness, the connector including, towards one end, a body having a curved end shaped to receive the hooked end of a wiper arm so that the curve of the hook faces towards the other end of the connector, first and second ribs each extending inwardly of a side wall of the other end of the connector, so that its free end can abut the curved end of the hook, and being flexibly resilient towards the side wall of the connector, such that the hooked end of a wiper arm can be pushed past each rib.

With such an arrangement the hooked end of the wiper arm can be slid past the flexible rib on to the receiving body. Once the curved end of the hooked end has gone past the end of the flexible rib it will snap into location over the curved end of the hooked end, thus resisting accidental displacement. If there is a need to remove the wiper arm from the connector then the rib can be pushed back towards the side of the connector thus enabling the hooked end to be moved out of the connector.

Accordingly, the present invention is characterised in that the curved end of the body of the connector is shaped to receive wiper blade hooked ends of different sizes and in that the second rib terminates at its free end at a longitudinal position different from that of the first rib, such that its free end can abut a curved end of a wiper blade hooked end of a size different to that of a wiper blade hooked end which can be abutted by the free end of the first rib.

The connector in accordance with the invention thus incorporates a second flexibly resilient rib which extends inwardly of the other side wall of the other end of the connector and terminates at its free end at a longitudinal position different from that of the first rib. There may be wiper arms with differing sizes of hooked end and the provision of the extra rib then allows for location of a different size of hooked end.

Optionally, the body of the connector has a pair of ledges which extends across the connector and below which the hooked end of the wiper blade of larger size can locate.

Ideally, the free end of the or each rib may be curved to conform to the curved end of the wiper arm.

The connector can be formed with a through-passageway which extends through the body from one side of the connector to the other. This will reduce the weight and amount of material needed for the connector. It is envisaged that the connector will preferably be formed as a plastics moulding.

The invention may be performed in various ways and a preferred embodiment thereof will now be described, by way of example, with reference to the accompanying drawings:-
Figure 1 is a side view of a connector for a windscreen wiper assembly of this invention;
Figure 2 is a partial vertical section through Figure 1;
Figures 3 and 4 are plan and end views respectively of the connector of Figures 1 and 2; and
Figure 5 shows, in perspective view, how the connector of Figures 1 and 4 is used to locate the hooked end of a wiper arm.

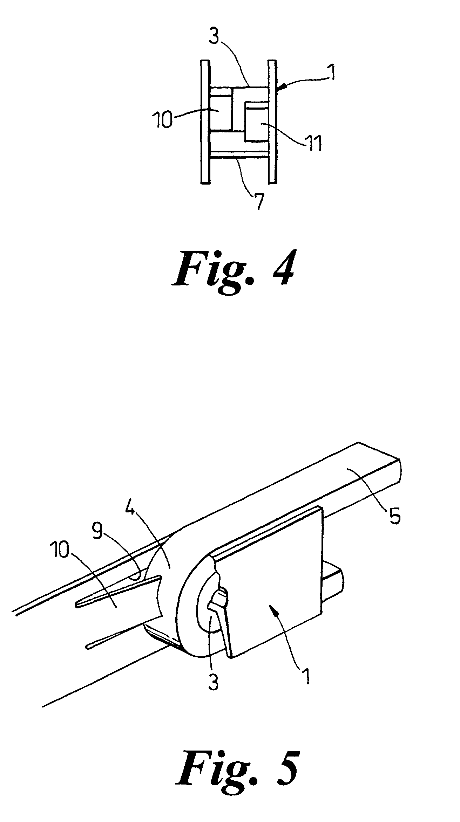

The connector 1 shown in the drawings incorporates a circular passageway 2 for receipt of a pin which will locate into a windscreen wiper harness. This enables the connector 1 to pivot with respect to the harness. The connector 1 incorporates a body 3 around which the hooked end 4 of a wiper arm 5 can be located, as shown in Figure 5. As can be seen, the hooked end 4 of the wiper arm locates around the curved end 6 of the body 3 which also incorporates the circular passageway 2. Conventionally, there are two main sizes for the hooked end 4 of a wiper arm 5. If a larger wiper arm 5 is used then the returning hooked end 4 will locate below a pair of ledges 7 extending across the connector body 1. The receiving body 3 has a through-passageway 8 to reduce the weight and material used for a plastic moulded body of the connector.

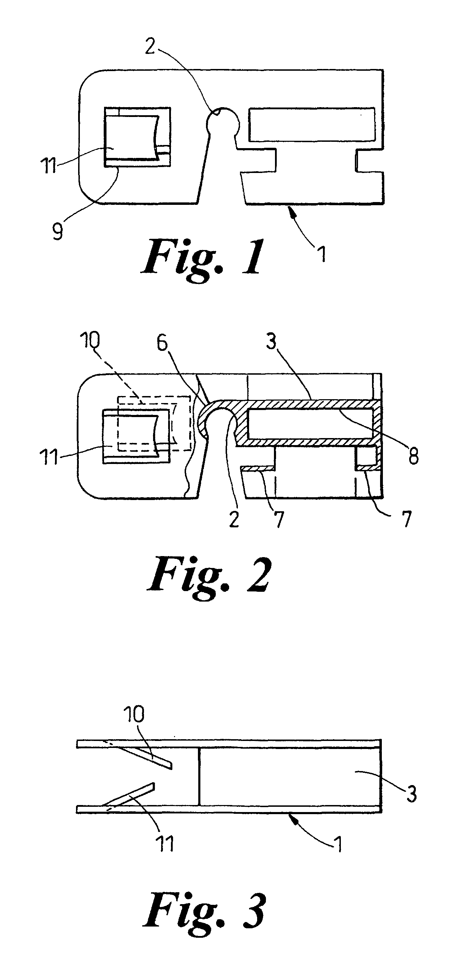

As can be seen, the side walls of the connector 1 each incorporates a window 9. From each window there is an inwardly extending rib 10, 11 which is urged inwardly, as can be seen clearly from Figures 3 and 5. These ribs 10, 11 are flexible so that the hooked end 4 of a wiper arm 5 can be pushed past them, with the ribs 10, 11 entering into the windows 9. However, the rib 10, 11 will then spring out again to locate behind the hooked end 4 and thus resist removal of the wiper arm 5 from the connector 1. Rib 10 is intended to locate the smaller type of wiper arm 5, whilst rib 11 locates the larger type of wiper arm 5. As can be seen from Figures 1 and 2, the end faces of the ribs 10 and 11 are curved to fit over the curved outer surface of the hooked end 4 of the wiper arm 5. Also, rib 11 is displaced downwardly so as to locate on to the centre line of the larger wiper arm.

## Claims

1. A connector (1) for locating a hooked end (4) of a wiper arm (5) and designed for pivotal connection in a windscreen wiper harness, the connector (1) including, towards one end, a body (3) having a curved end (6) shaped to receive the hooked end (4) of a wiper arm, so that the curve of the hooked end faces towards the other end of the connector, first and second ribs (10, 11) each extending inwardly of a side wall of the other end of the connector (1), so that its free end can abut the curved end of the hooked end, and being flexibly resilient towards the side wall of the connector (1), such that the hooked end (4) of the wiper arm can be pushed past each rib (10, 11),
**characterised in that** the curved end (6) of the body (3) of the connector (1) is shaped to receive wiper blade hooked ends (4) of different sizes and **in that** the second rib (11) terminates at its free end at a longitudinal position different from that of the first rib (10), such that its free end can abut a curved end of a wiper blade hooked end (4) of a size different to that of a wiper blade hooked end (4) which can be abutted by the free end of the first rib (10).

2. A connector (1) according to claim 1 wherein the body (3) of the connector (1) has a pair of ledges (7) which extends across the connector (1) and below which a hooked end (4) of a wiper blade of larger size can locate.

3. A connector (1) according to claim 1 or 2, wherein the free end of each of the first and second ribs (10, 11) is curved to conform to the curve of the hooked end of a wiper arm.

4. A connector (1) according to claim 1, 2 or 3, wherein a through-passageway (2) is formed through the body (3) from one side of the connector (1) to the other.

5. A connector (1) according to any preceding claim formed as a plastics moulding.

## Patentansprüche

1. Verbindungsstück (1) zum Festlegen eines hakenförmigen Endes (4) eines Wischerarms (5) und ausgebildet für eine Schwenkverbindung in einer Scheibenwischerhalterung, wobei das Verbindungsstück (1) in Richtung des einen Endes einen Körper (3) aufweist, der ein gekrümmtes Ende (6) hat, welches so geformt ist, dass es das hakenförmige Ende (4) eines Wischerarms aufnimmt, so dass die Krümmung des hakenförmigen Endes in Richtung des anderen Endes des Verbindungsstücks weist, und erste und zweite Rippen (10, 11), die sich jeweils nach innen von einer Seitenwand des anderen Endes des Verbindungsstücks (1) erstrecken, so dass ihr freies Ende an dem gekrümmten Ende des hakenförmigen Endes angrenzen kann, und in Richtung der Seitenwand des Verbindungsstücks (1) elastisch federnd sind, so dass das hakenförmige Ende (4) des Wischerarms an jeder Rippe (10, 11) vorbei geschoben werden kann, **dadurch gekennzeichnet, dass** das gekrümmte Ende (6) des Körpers (3) des Verbindungsstücks (1) so geformt ist, dass es hakenförmige Wischerblattenden (4), die unterschiedliche Größen haben, aufnimmt, und dass die zweite Rippe (11) an ihrem freien Ende an einer anderen Position in Längsrichtung als die erste Rippe (10) endet, so dass ihr freies Ende an einem gekrümmten Ende eines hakenförmigen Endes (4) eines Wischerblatts angrenzen kann, das eine andere Größe hat als das hakenförmige Ende (4) eines Wischerblatts, an welches das freie Ende der ersten Rippe (10) angrenzen kann.

2. Verbindungsstück (1) nach Anspruch 1, wobei der Körper (3) des Verbindungsstücks (1) ein Paar Leisten (7) hat, welches sich quer über das Verbindungsstück (1) erstreckt und unterhalb von dem ein hakenförmiges Ende (4) eines größeren Wischerblatts festgelegt sein kann.

3. Verbindungsstück (1) nach Anspruch 1 oder 2, wobei das freie Ende der ersten als auch zweiten Rippe (10, 11) so gekrümmt ist, dass es der Krümmung des hakenförmigen Endes eines Wischerarms angepasst ist.

4. Verbindungsstück (1) nach Anspruch 1, 2 oder 3, wobei ein Durchgang (2) von einer Seite des Verbindungsstücks (1) zu der anderen durch den Körper hindurch gebildet ist.

5. Verbindungsstück (1) nach einem der vorhergehenden Ansprüche, welches als Kunststoff-Formteil gebildet ist.

## Revendications

1. Connecteur (1) pour positionner une extrémité en crochet (4) d'un bras d'essuie-glace (5) et conçu pour une connexion pivotante dans un harnais d'essuie-glace, le connecteur (1) comprenant, vers une extrémité, un corps (3) ayant une extrémité incurvée (6) formée pour recevoir l'extrémité en crochet (4) d'un bras d'essuie-glace, de sorte que la courbe de l'extrémité en crochet se trouve face à l'autre extrémité du connecteur, des première et seconde nervures (10, 11) s'étendant chacune vers l'intérieur d'une paroi latérale de l'autre extrémité du connecteur (1), de sorte que son extrémité libre peut buter sur l'extrémité incurvée de l'extrémité en crochet, et étant élastique de manière flexible vers la paroi latérale du connecteur (1), de sorte que l'extrémité en crochet (4) du bras d'essuie-glace peut être poussée au-delà de chaque nervure (10, 11),
**caractérisé en ce que** l'extrémité incurvée (6) du corps (3) du connecteur (1) est formée pour recevoir des extrémités en crochet (4) de balai d'essuie-glace de différentes tailles, et **en ce que** la seconde nervure (11) se termine au niveau de son extrémité libre en une position longitudinale différente de celle de la première nervure (10), de sorte que son extrémité libre peut buter sur une extrémité incurvée d'une extrémité en crochet d'un balai d'essuie-glace (4) d'une taille différente de celle d'une extrémité en crochet d'un balai d'essuie-glace (4) contre laquelle peut buter l'extrémité libre de la première nervure (10).

2. Connecteur (1) selon la revendication 1, dans lequel le corps (3) du connecteur (1) a une paire de rebords (7) qui s'étend en travers du connecteur (1) et en-dessous de laquelle peut se positionner une extrémité en crochet (4) d'un balai d'essuie-glace de plus grande taille.

3. Connecteur (1) selon la revendication 1 ou 2, dans lequel l'extrémité libre de chacune des première et seconde nervures (10, 11) est incurvée pour se conformer à la courbe de l'extrémité en crochet d'un bras d'essuie-glace.

4. Connecteur (1) selon la revendication 1, 2 ou 3, dans lequel un passage traversant (2) est formé à travers le corps (3) depuis un côté jusqu'à l'autre du connecteur (1)

5. Connecteur (1) selon l'une quelconque des revendications précédentes, formé sous forme de moulage plastique.
